# EUROPÄISCHE PATENTSCHRIFT

(11) **EP 0 899 803 B1**
(45) Veröffentlichungstag und Bekanntmachung des Hinweises auf die Patenterteilung: **05.12.2001**
(21) Anmeldenummer: 98114136.9
(22) Anmeldetag: 29.07.1998
(51) Int. Cl.: H01M 4/73, H01M 4/72

(54) **Elektrodengitter für Bleiakkumulatoren**
Electrode grid for lead-acid battery
Grille d'électrode pour batterie acide au plomb

(30) Priorität: 27.08.1997 DE 19737197
(43) Veröffentlichungstag der Anmeldung: 03.03.1999
(73) Patentinhaber: VB Autobatterie GmbH, 30419 Hannover (DE)
(72) Erfinder: Richter, Gerolf, Dr., 31139 Hildesheim (DE); Illmann, Joachim, 30827 Garbsen (DE); Streuer, Peter, 30559 Hannover (DE)
(74) Vertreter: Kaiser, Dieter Ralf, Dipl.-Ing.

(56) Entgegenhaltungen:
- DE-A- 1 940 634
- DE-A- 3 435 913
- GB-A- 183 920
- US-A- 3 249 981
- US-A- 3 981 742
- US-A- 4 055 711
- US-A- 5 098 799

## Beschreibung

Die Erfindung betrifft ein Elektrodengitter für Bleiakkumulatoren mit rechteckigen Gitterrahmen, darauf angeordneten Pastierhilfsschienen sowie einer Schar von Gitterstegen, die das Gerüst zur Aufnahme der aktiven Masse bilden.

Für die Herstellung von Blei-Säure-Akkumulatoren sind eine Vielzahl von Elektrodengittern bekannt, die den unterschiedlichen, teilweise einander widersprechenden Anforderungen gerecht werden sollen. So wird von den Elektrodengittern gefordert, daß sie ein geringes Gewicht, einen geringen inneren Widerstand, eine gute Herstellbarkeit, verbunden mit einer guten Formstabilität bei gleichzeitigem guten Haltevermögen für die aktive Masse aufweisen. In Kraftfahrzeugen eingesetzte Blei-Säure-Akkumulatoren sollen eine hohe spezifische Kapazität sowohl volumen- als auch gewichtsbezogen und eine gute Stromabgabe aufweisen. Da die durch Gußverfahren hergestellten Elektrodengitter fertigungsbedingt Abweichungen in ihrer Dicke aufweisen, was zu Schwierigkeiten beim Einpastieren der aktiven Masse führt und größere Einbauabstände bedingt, wurde in dem Dokument US 3,249,981 bereits vorgeschlagen, auf den Gitterrahmen Pastierhilfsschienen vorzusehen, die anschließend auf eine einheitliche Gitterdicke kalibriert werden. Allerdings wird dadurch das Gittergewicht wieder erhöht.

Die Erfindung hat sich die Aufgabe gestellt, ein Elektrodengitter anzugeben, das den oben genannten Forderungen besonders hinsichtlich der Gewichtsminimierung gerecht wird.

Erfindungsgemäß wird die Aufgabe durch ein Elektrodengitter gelöst, wie es in Anspruch 1 angegeben ist. Weitere vorteilhafte Ausgestaltungen des erfindungsgemäßen Elektrodengitters sind in den Ansprüchen 2 - 3 dargelegt.

Es wurde gefunden, daß für die Herstellung gleichmäßig pastierter Elektrodengitter Pastierhilfsschienen lediglich in Pastierrichtung für ausreichend sind. Die daraus hergestellten Elektrodenplatten weisen im Vergleich zu den bekannten Elektrodenplatten keine Verschlechterungen ihrer Eigenschaften auf, obwohl weniger Blei beim Gießen vergleichbar großer Elektrodengitter eingesetzt wird. Für die gebräuchlichen Gitterdicken von 1.1, 1.3, 1.5, 1.7 und 1.9 mm bedeutet das. daß die entsprechenden Gitterdicken nicht mit einer Veränderung der Dicke des Gitterrahmens verbunden ist, sondern nur die Höhe der Pastierhilfsschienen entsprechend gewählt wird. Bei einer Gitterdicke von 1.7 mm wird dadurch beispielsweise eine Gewichtsreduzierung von ca. 10 % erzielt. Darüber hinaus wird durch die erfindungsgemäße Elektrodengittergestaltung die Pastierbarkeit des Elektrodengitters verbessert.

Die Erfindung wird nachfolgend an zwei Ausführungsbeispielen und deren Abbildungen ausführlicher erläutert.

Es zeigen
Figur 1: Eine perspektivische Darstellung eines erfindungsgemäßen Elektrodengitters gemäß Beispiel 1
Figur 2: Die Draufsicht auf ein Elektrodengitter gemäß Beispiel 2 und die Schnittdarstellung dieses Elektrodengitters entlang der Linien A-A, B-B, C-C und D-D.

### Beispiel 1

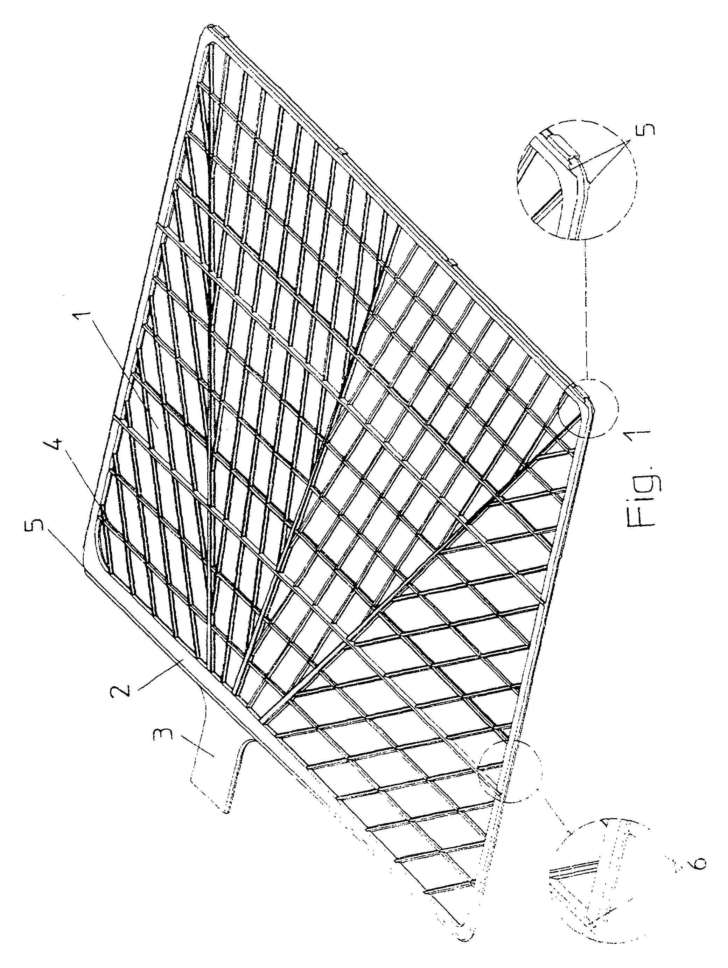

Ein rechteckiges Elektrodengitter 1 gemäß Figur 1 besitzt im mittleren Bereich der oberen Rahmenkante 2 eine Stromableiterfahne 3. Die im Gitterrahmen befindlichen Gitterstege 4 sind in zwei Gruppen angeordnet, wobei eine Gruppe parallel zu oberen Rahmenkante 2 verläuft und von der anderen Gruppe, die zur Stromableiterfahne 3 hin ausgerichtet ist, gekreuzt wird. Die Pastierhilfsschienen 5 sind auf der Vorder- und Rückseite des oberen und unteren Elektrodengitterrahmens sowie jeweils nur auf einer Seite der parallel zur oberen Rahmenkante verlaufenden Gitterstege 6 angeordnet.

### Beispiel 2

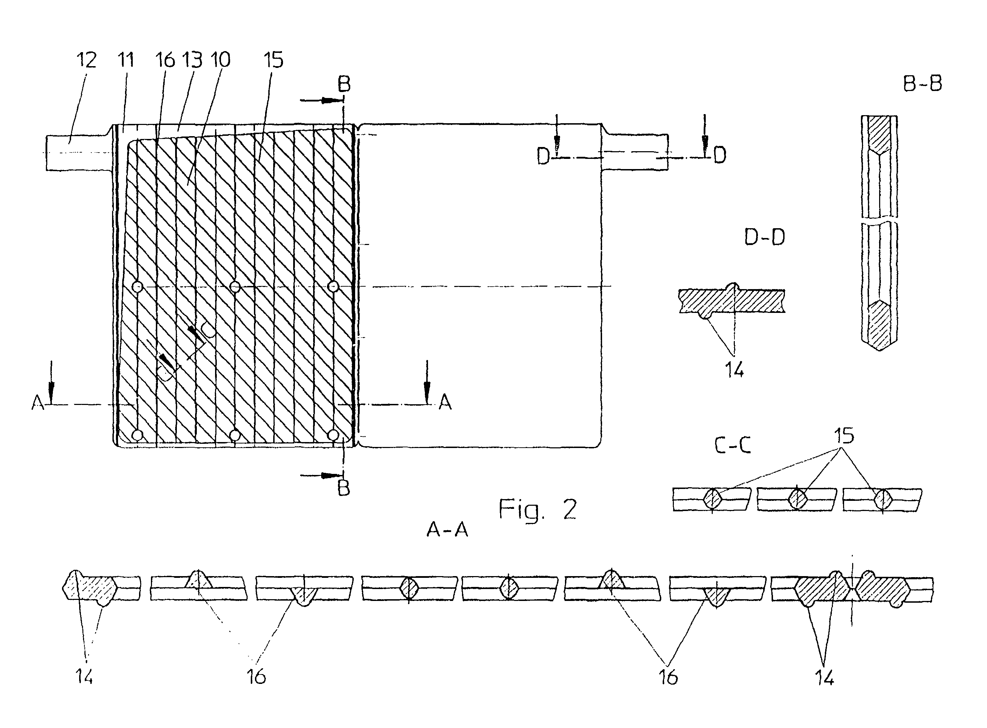

Ein rechteckiges Elektrodengitter 10 gemäß Figur 2 besitzt an einer Ecke der oberen Rahmenkante 11 eine Stromableiterfahne 12. Der Gitterrahmen 13 ist nicht gleichförmig ausgebildet, sondern insbesondere auf den an die Stromableiterfahne 12 angrenzenden Gitterseiten in Richtung auf die Stromableiterfahne 12 verbreitert. Auf dem oberen und unteren 0.8 bis 1,2 mm dicken Gitterrahmen 13 sind auf Vorder- und Rückseite des Gitters 10 0,2 bis 0,6 mm hohe Pastierhilfsschienen 14 angeordnet, die sich parallel zum oberen und unteren Gitterrand erstrecken. Die Pastierhiifsschienen 14 der Vorder- und Rückseite des Elektrodengitters 10 sind so gegeneinander versetzt, daß sie nicht aufeinander zu liegen kommen und damit die Stapelbarkeit des Elektrodengitters 10 beeinträchtigen würden. Die diagonal verlaufenden Gitterstege 15 besitzen die Gitterrahmendicke. Vorzugsweise sind ein oder mehrere der parallel zur oberen Gitterkante 11 verlaufenden Gitterstege 16 ebenfalls als Pastierhilfsschienen ausgebildet, die einen etwa dreieckigen Querschnitt aufweisen, wobei sich die Grundseite des Dreiecks ungefähr in der Mitte der Gitterebene befindet und die Höhe des Dreiecks etwa der halben Gitterrahmendicke zuzüglich der Höhe der Pastierschienen 14 entspricht. Auch in diesem Fall sind die mit solchen Pastierhilfsschienen versehenen Gitterstege auf der Vor- und Rückseite des Elektrodengitters gegeneinander versetzt, um die Gitter gut stapeln zu können.

## Patentansprüche

1. Elektrodengitter für Bleiakkumulatoren mit einem rechteckigen Gitterrahmen, darauf angeordneten Pastierhilfsschienen sowie einer Schar von Gitterstegen, die das Gerüst zur Aufnahme der aktiven Masse bilden, **dadurch gekennzeichnet, dass** sich die Pastierhilfsschienen auf beiden Seiten des Elektrodengitters lediglich in einer Richtung erstrecken und dass die Pastierhilfsschienen auf Vor- und Rückseite des Elektrodengitters gegeneinander versetzt angeordnet sind.

2. Elektrodengitter nach Anspruch 1, **dadurch gekennzeichnet, dass** auf mindestens zwei der in dieser Richtung verlaufenden Gitterstege jeweils nur auf einer Gitterseite Pastierhilfsschienen so angeordnet sind, dass auf jeder Gitterseite mindestens eine zusätzliche Pastierhilfsschiene vorhanden ist.

3. Elektrodengitter nach einem der Ansprüche 1 bis 2, **dadurch gekennzeichnet, dass** die Pastierhilfsschienen etwa die Gitterstegbreite der in dieser Richtung verlaufenden Gitterstege besitzen und ihre Höhe etwa 20 bis 60% der Gitterrahmendicke entspricht.

## Claims

1. Electrode grid for lead storage batteries, having a rectangular grid frame, auxiliary pasting rails arranged thereon and a set of grid webs which form the framework for accommodating the active material, **characterized in that** the auxiliary pasting rails on both sides of the electrode grid extend in only one direction, and **in that** the auxiliary pasting rails on the front and rear sides of the electrode grid are arranged offset with respect to one another.

2. Electrode grid according to Claim 1, **characterized in that**, on at least two of the grid webs running in this direction, auxiliary pasting rails are in each case arranged on only one grid side, in such a way that at least one additional auxiliary pasting rail is present on each grid side.

3. Electrode grid according to either of Claims 1 and 2, **characterized in that** the auxiliary pasting rails are of approximately the same width as the grid webs running in this direction, while their height corresponds to approximately 20 to 60% of the thickness of the grid frame.

## Revendications

1. Grille d'électrode pour des accumulateurs au plomb comprenant un châssis de grille, rectangulaire, portant des rails d'empâtage ainsi qu'un réseau d'entretoises de grille formant l'ossature pour recevoir la masse active,
**caractérisée en ce que**
les rails d'empâtage s'étendent sur les deux faces de la grille d'électrode uniquement dans une direction et les rails d'empâtage de la face avant et de la face arrière de la grille d'électrode sont décalés l'un par rapport à l'autre.

2. Grille d'électrode selon la revendication 1,
**caractérisée en ce que**
sur au moins deux entretoises de grille dirigées dans cette direction chaque fois seulement sur une face de la grille on a des rails d'empâtage et sur chaque face de la grille on a au moins un rail d'empâtage supplémentaire.

3. Grille d'électrode selon l'une quelconque des revendications 1 et 2,
**caractérisée en ce que**
les rails d'empâtage ont sensiblement la largeur des entretoises du réseau dirigées dans cette direction et leur hauteur correspond à environ 20-60 % de l'épaisseur du cadre de la grille.
